# EUROPÄISCHE PATENTANMELDUNG

(11) **EP 4 544 890 A1**
(43) Veröffentlichungstag der Anmeldung: **30.04.2025**
(21) Anmeldenummer: 24401022.9
(22) Anmeldetag: 24.09.2024
(51) Int. Cl.: A01B 3/421, A01B 3/42

(54) **ANBAUDREHPFLUG FÜR EINE ZUGMASCHINE SOWIE VERFAHREN ZU DESSEN STEUERUNG**

(30) Priorität: 27.10.2023 DE 102023129656
(71) Anmelder: Amazonen-Werke H. Dreyer SE & Co. KG, 49205 Hasbergen (DE)
(72) Erfinder: Rehnen, Pascal, 49205 Hasbergen (DE); Wilken, Martin, 49205 Hasbergen (DE)

(57) **Zusammenfassung**

Die Erfindung betrifft einen Anbaudrehpflug (1) für eine Zugmaschine aufweisend:
- einen Anbaubock zum Anbau an eine Zugmaschine,
- einen Pflugrahmen (2) zur Anbringung von Pflugscharen,
- einen Wendebock, der mit dem Pflugrahmen (2) verbunden und zusammen mit dem Pflugrahmen (2) um eine Schwenkachse (S) drehbar am Anbaubock gelagert ist,
- einen Rahmenschwenkaktor (3), mit welchem der Pflugrahmen (2) und/oder der Wendebock um die Schwenkachse (S) drehbar ist,
- einen Einschwenkaktor (4), mit welchem der Pflugrahmen (2) um eine Einschwenkachse (E) quer zur Schwenkachse (S) hin in Flucht mit der Schwenkachse (S) oder weg aus der Flucht mit der Schwenkachse (S) bewegbar ist,
- wobei der Anbaudrehpflug (1) einen elektrischen oder hydraulischen Sensor (5) zur Erfassung einer Position des Pflugrahmens (2) relativ zur Schwenkachse (S) aufweist.

Ferner betrifft die Erfindung ein Verfahren zur Steuerung eines Anbaudrehpfluges (1).

## Beschreibung

Die Erfindung betrifft einen Anbaudrehpflug für eine Zugmaschine sowie ein Verfahren zur Steuerung eines Anbaudrehpfluges.

Aus der EP 3 427 559 A1 ist ein Anbaudrehpflug mit einem Anbaubock zum Anbau an eine Zugmaschine bekannt. Der Anbaudrehpflug umfasst einen Pflugrahmen, der zwei Pflugscharreihen trägt und um eine liegende Wende- oder Schwenkachse drehbar ist.

Der Pflugrahmen ist an einem Wendebock um eine Einschwenkachse quer zur Schwenkachse einschwenkbar gelagert und durch einen Druckmittel betätigbaren Einschwenkaktor für den Wendevorgang in eine Wendestellung mit verringerter Querausladung einschwenkbar. Dabei ist der Wendebock um die Schwenkachse schwenkbar am Anbaubock gelagert ist.

Ferner ist der Einschwenkaktor von einer Schwenkwinkelsteuerung für verschiedene Schnittbreiten und/oder Arbeitsbreiten in verschiedene Hubstellungen zum Erreichen der gewünschten Wendestellung steuerbar. Die Schwenkwinkelsteuerung weist eine Erfassungseinrichtung zum Erfassen der Schwenkstellung des Pflugrahmens relativ zum Wendebock bezüglich der Einschwenkachse und ein Sperrventil zum Absperren der Druckmittelversorgung des Einschwenkaktors zum Anfahren und Halten einer Wende- und/oder Transportstellung des Einschwenkaktors in Abhängigkeit der erfassten Schwenkstellung des Pflugrahmens auf. Hierbei öffnet oder sperrt die Erfassungseinrichtung das Sperrventil in Abhängigkeit der Schwenkstellung des Pflugrahmens relativ zum Wendebock.

Vor diesem Hintergrund ist es Aufgabe der vorliegenden Erfindung, einen Anbaudrehpflug für eine Zugmaschine sowie ein Verfahren zu dessen Steuerung anzugeben, welcher bzw. welches eine Alternative zur Schwenkwinkelsteuerung und/oder zur Erfassungseinrichtung aus dem Stand der Technik bietet.

Diese Aufgabe wird durch die Merkmale der unabhängigen Patentansprüche gelöst. Weitere vorteilhafte Weiterbildungen sind Gegenstand der Unteransprüche.

Ein erster Aspekt der vorliegenden Erfindung umfasst einen Anbaudrehpflug für eine Zugmaschine.

Der Anbaudrehpflug weist einen Anbaubock zum Anbau an eine Zugmaschine, einen Pflugrahmen zur Anbringung von Pflugscharen und einen Wendebock auf, der mit dem Pflugrahmen verbunden und zusammen mit dem Pflugrahmen um eine Schwenkachse drehbar am Anbaubock gelagert ist.

Ferner umfasst der Anbaudrehpflug einen Rahmenschwenkaktor, mit welchem der Pflugrahmen und/oder der Wendebock um die Schwenkachse drehbar ist. Der Rahmenschwenkaktor kann eine Druckwaage sein oder als solche ausgebildet sein.

Außerdem hat der Anbaudrehpflug einen Einschwenkaktor, mit welchem der Pflugrahmen um eine Einschwenkachse quer zur Schwenkachse hin in Flucht mit der Schwenkachse oder weg aus der Flucht mit der Schwenkachse bewegbar ist.

Unter einem Hinbewegen des Pflugrahmens in Flucht mit der Schwenkachse kann ein Ausrichten des Pflugrahmens entlang und an der Schwenkachse verstanden werden, wie z. B. bei einer sich schließenden Schere. Somit kann unter einem Hinbewegen des Pflugrahmens in Flucht mit der Schwenkachse eine Verkleinerung des Winkels zwischen dem Pflugrahmen und der Schwenkachse verstanden werden. Dabei können Pflugrahmen und Schwenkachse jeweils einen Schenkel / Scherenschenkel einer sich schließenden oder geschlossenen Schere bilden. Ferner kann der Pflugrahmen um die Einschwenkachse drehen. Unter einem Wegbewegen des Pflugrahmens aus der Flucht mit der Schwenkachse kann eine Vergrößerung des Winkels zwischen dem Pflugrahmen und der Schwenkachse verstanden werden, wie z. B. bei einer auseinandergehenden Schere bzw. wie bei sich öffnenden Scherenschenkel einer Schere. Hierbei kann der Pflugrahmen ebenfalls um die Einschwenkachse, jedoch entgegengesetzt zum Hinbewegen, drehen. Dadurch ist also der Abstand von Pflugscharen zur Schwenkachse veränderbar bzw. verringerbar, um das Drehen des Pflugrahmens um die Schwenkachse zu erleichtern. Ferner ist dadurch der Abstand von Pflugscharen zur Schwenkachse erhöhbar, um ein anschließendes Pflügen zu ermöglichen.

Auch kann der Einschwenkaktor zwischen einer ersten Stellung (Abstand von Pflugscharen zur Schwenkachse ist maximal) und einer zweiten Stellung (Abstand von Pflugscharen zur Schwenkachse ist minimal) verfahrbar sein. Dabei kann in der ersten Stellung der Anbaudrehpflug zum Pflügen einsatzbereit sein, wohingegen in der zweiten Stellung der Anbaudrehpflug zum Transport auf der Straße oder zum Drehen um die Schwenkachse einsatzbereit sein kann.

Des Weiteren umfasst der Anbaudrehpflug einen elektrischen oder hydraulischen Sensor zur Erfassung einer Position des Pflugrahmens relativ zur Schwenkachse.

Der Sensor kann ein Kontaktschalter sein, welcher, z. B. nur, bei Kontakt ein elektrisches oder hydraulisches Signal erzeugen. Dabei kann das elektrische Signal eine erhöhte oder verminderte Spannung sein. Das hydraulische Signal kann beispielsweise die Freigabe eines Fluidstroms oder dessen Unterbrechung sein. Auch kann der Sensor ein hydraulisches Druckventil sein oder als solches ausgebildet sein.

Auch kann der Sensor, z. B. nur, bei Kontakt mit dem Pflugrahmen oder bei Kontakt mit dem Einschwenkaktor oder bei Kontakt mit einem Anschlag am Einschwenkaktor ein elektrisches oder hydraulisches Signal erzeugen.

Zudem kann der Sensor so am Pflugrahmen angeordnet sein, dass der Sensor, z. B. "nur dann", kontaktierbar ist, wenn der Abstand von Pflugscharen zur Schwenkachse ein Mindestmaß erreicht bzw. minimal ist. Anders ausgedrückt, kann der Sensor dann kontaktierbar sein, wenn der Winkel zwischen dem Pflugrahmen und der Schwenkachse ein Mindestmaß erreicht bzw. minimal ist. Dabei können Pflugrahmen und Schwenkachse jeweils einen Schenkel einer sich schließenden oder geschlossenen Schere bilden.

Außerdem kann der Anbaudrehpflug eine Steuerschaltung umfassen, mit welcher der Rahmenschwenkaktor und/oder der Einschwenkaktor verbunden und/oder steuerbar ist.

Der Sensor kann mit der Steuerschaltung verbunden sein, sodass ein Signal des Sensors von der Steuerschaltung empfangbar ist.

Auch kann die Steuerschaltung eingerichtet und ausgebildet sein, nach dem Ausheben des Anbaudrehpfluges aus einem Feldboden den Einschwenkaktor so zu verfahren, dass dieser hin zur Schwenkachse verfährt. Dabei kann der Pflugrahmen um die Einschwenkachse gedreht werden; und zwar so, dass der Pflugrahmen bestmöglich mit der Schwenkachse fluchten kann.

Außerdem kann die Steuerschaltung eingerichtet und ausgebildet sein, nach Kontakt des Sensors die Bewegung des Einschwenkaktors zu stoppen und eine Drehung des Pflugrahmens und/oder des Wendebocks mithilfe des Rahmenschwenkaktors zu aktivieren.

So kann die Steuerschaltung eingerichtet und ausgebildet sein, nach Drehung des Pflugrahmens den Rahmenschwenkaktor zu deaktivieren.

Auch ist es möglich, dass die Steuerschaltung eingerichtet und ausgebildet ist, nach Drehung des Pflugrahmens den Einschwenkaktor so zu verfahren, dass dieser weg von der Schwenkachse verfährt. Dabei kann der Pflugrahmen um die Einschwenkachse gedreht werden; und zwar so, dass der Pflugrahmen nur noch gering oder gar nicht mit der Schwenkachse fluchten kann. So können beispielsweise Pflugrahmen und Schwenkachse einen Winkel zwischen 20 und 90 Grad einschließen, wobei Pflugrahmen und Schwenkachse jeweils einen Schenkel einer sich schließenden oder geschlossenen Schere bilden können.

Des Weiteren kann die Steuerschaltung eine Schalteinheit umfassen. Die Schalteinheit kann mit dem Einschwenkaktor und/oder dem Rahmenschwenkaktor verbunden sein.

Dabei kann die Schalteinheit eingerichtet und ausgebildet sein, den Einschwenkaktor und/oder den Rahmenschwenkaktor zu verfahren.

Ferner kann die Schalteinheit eingerichtet und ausgebildet sein, ein Signal des Sensors auszuwerten und entsprechend den Einschwenkaktor und/oder den Rahmenschwenkaktor zu verfahren.

Außerdem kann der Anbaudrehpflug einen Fluidzulauf und einen Fluidrücklauf umfassen, um den Einschwenkaktor und/oder den Rahmenschwenkaktor mit druckbeaufschlagten Fluid zu versorgen.

Der Fluidzulauf kann ein druckbeaufschlagtes Fluid zur Verfügung stellen.

Des Weiteren kann die Steuerschaltung ein 3/2 Wege-Ventil aufweisen, welches zwischen einem Fluidzulauf des Anbaudrehpfluges und dem Einschwenkaktor und/oder zwischen einem Fluidzulauf des Anbaudrehpfluges und einer Schalteinheit der Steuerschaltung angeordnet ist.

Die Steuerschaltung kann ein 3/2 Wege-Ventil aufweisen, welches zwischen einem Fluidzulauf des Anbaudrehpfluges und dem Rahmenschwenkaktor angeordnet ist.

Das 3/2 Wege-Ventil kann einen Eingang und zwei Ausgänge umfassen. Der Eingang kann fluidkommunizierend mit einem Fluidzulauf des Anbaudrehpfluges verbunden sein. Ein erster Ausgang kann mit einer Schalteinheit der Steuerschaltung und/oder mit einem Sperranschluss fluidkommunizierend verbindbar sein. Ein zweiter Ausgang kann mit einem Sperranschluss und/oder mit dem Einschwenkaktor und/oder mit einem 2/2 Wege-Ventil der Steuerschaltung verbindbar sein.

In einer Grundstellung des 3/2 Wege-Ventils kann dieses einen Durchfluss von einem Fluidzulauf des Anbaudrehpfluges zum Einschwenkaktor gestatten und einen Durchfluss zum Rahmenschwenkaktor sperren. Dabei können der Eingang und der zweite Ausgang miteinander fluidkommunizierend miteinander verbunden werden.

In einer Arbeitsstellung des 3/2 Wege-Ventils kann dieses einen Durchfluss von einem Fluidzulauf des Anbaudrehpfluges zum Rahmenschwenkaktor gestatten und einen Durchfluss zum Einschwenkaktor sperren. Dabei können der Eingang und der erste Ausgang fluidkommunizierend miteinander verbunden werden.

Des Weiteren kann die Steuerschaltung ein 2/2 Wege-Ventil aufweisen, welches zwischen einem 3/2 Wege-Ventil der Steuerschaltung und dem Einschwenkaktor sowie einem Fluidrücklauf des Anbaudrehpfluges angeordnet ist.

Das 2/2 Wege-Ventil kann einen Eingang und einen Ausgang umfassen. Der Eingang kann mit einem Einschwenkaktor und mit einem 3/2 Wege-Ventil der Steuerschaltung bzw. mit dessen zweiten Ausgang fluidkommunizierend verbunden sein. Der Ausgang kann mit einem Fluidrücklauf des Anbaudrehpfluges fluidkommunizierend verbindbar sein.

In einer Grundstellung des 2/2 Wege-Ventils kann dieses gesperrt sein, z. B. mittels eines Rückschlagventils.

In einer Arbeitsstellung des 2/2 Wege-Ventils kann dieses einen Durchfluss zum Fluidrücklauf des Anbaudrehpfluges gestatten. Dabei können der Eingang und der Ausgang fluidkommunizierend miteinander verbunden sein.

Außerdem kann die Schalteinheit eingerichtet und ausgebildet sein, den Einschwenkaktor und/oder den Rahmenschwenkaktor und/oder das 3/2 Wege-Ventil und/oder das 2/2 Wege-Ventil zu verfahren und/oder anzusteuern und/oder zu schalten.

Die Schalteinheit kann ferner eingerichtet und ausgebildet sein, ein Signal des Sensors auszuwerten und entsprechend den Einschwenkaktor und/oder den Rahmenschwenkaktor und/oder das 3/2 Wege-Ventil und/oder das 2/2 Wege-Ventil zu verfahren und/oder zu schalten.

Des Weiteren kann der Einschwenkaktor ein doppelwirkender Hydraulik- oder Pneumatikzylinder sein. Der Rahmenschwenkaktor kann ein doppelwirkender Hydraulik- oder Pneumatikzylinder sein.

Ein zweiter Aspekt der vorliegenden Erfindung umfasst ein Verfahren zur Steuerung eines Anbaudrehpfluges.

Es wird ausdrücklich darauf hingewiesen, dass die Merkmale des Anbaudrehpfluges, wie sie unter dem ersten Aspekt erwähnt werden, einzeln oder miteinander kombinierbar bei dem Verfahren zur Steuerung eines Anbaudrehpfluges Anwendung finden können.

Anders ausgedrückt, die oben unter dem ersten Aspekt der Erfindung genannten Merkmale betreffend den Anbaudrehpflug können auch hier unter dem zweiten Aspekt der Erfindung mit weiteren Merkmalen kombiniert werden.

Das Verfahren zur Steuerung eines Anbaudrehpfluges bedarf eines Anbaudrehpfluges. Der Anbaudrehpflug umfasst einen Anbaubock zum Anbau an eine Zugmaschine, einen Pflugrahmen zur Anbringung von Pflugscharen sowie einen Wendebock, der mit dem Pflugrahmen verbunden und zusammen mit dem Pflugrahmen um eine Schwenkachse drehbar am Anbaubock gelagert ist.

Zudem weist der Anbaudrehpflug einen Rahmenschwenkaktor, mit welchem der Pflugrahmen und/oder der Wendebock um die Schwenkachse drehbar ist, auf.

Außerdem umfasst der Anbaudrehpflug einen Einschwenkaktor, mit welchem der Pflugrahmen um eine Einschwenkachse quer zur Schwenkachse hin in Flucht mit der Schwenkachse oder weg aus der Flucht mit der Schwenkachse bewegbar ist.

Dabei umfasst das Verfahren die folgenden Schritte.

Ein erster Schritt weist ein Ausheben des Anbaudrehpfluges aus einem Feldboden auf.

Ein weiterer Schritt umfasst ein Verfahren des Einschwenkaktors und zwar derart, dass sich der Pflugrahmen um die Einschwenkachse quer zur Schwenkachse hin in Flucht mit der Schwenkachse bewegt. Dadurch ist die Querausladung verringerbar und das Drehen des Pflugrahmens um die Schwenkachse wird erleichtert.

Bei Kontaktierung eines Sensors umfasst das Verfahren ein Stoppen der Bewegung des Einschwenkaktors und Aktivieren einer Drehung des Pflugrahmens mithilfe des Rahmenschwenkaktors um die Schwenkachse.

Nach Drehung des Pflugrahmens findet in einem weiterer Verfahrensschritt ein Deaktivieren des Rahmenschwenkaktors statt.

Ein anschließender Schritt umfasst ein Verfahren des Einschwenkaktors und zwar derart, dass der Pflugrahmen um die Einschwenkachse quer zur Schwenkachse weg aus der Flucht mit der Schwenkachse bewegbar ist, um ein weiteres Pflügen zu ermöglichen.

Daraufhin kann ein Schritt des Verfahrens ein Ablassen des Anbaudrehpfluges in einen Feldboden aufweisen.

Nachfolgend wird der oben dargestellte Erfindungsgedanke nochmals und ergänzend mit anderen Worten ausgedrückt.

Dieser Gedanke betrifft - vereinfacht dargestellt - einen Anbaudrehpflug.

In der ersten Ausführung kann eine Ventiltechnik extern von einem Wendebock für die Schaltung verantwortlich sein. Hier können elektrisch vorgesteuerte Wegeventile genutzt werden. Das heißt, der Ölstrom zu einem Einschwenkzylinder bzw. Einschwenkaktor wird nicht abgesperrt, sondern bei Betätigung eines Endschalters oder eines Sensors über ein z. B. elektrisch vorgesteuertes 3/2 Wegeventil auf einen Wendezylinder bzw. auf einen Rahmenschwenkaktor umgeleitet. So kann eine Folgesteuerung eingeleitet werden.

Für den Fall, dass der Wendevorgang beendet ist, kann sich die bekannte Druckwaage im Wendezylinder bzw. der Rahmenschwenkaktor umschalten. Somit kann der Schwenkzylinder bzw. der Rahmenschwenkaktor zurückgefahren werden.

Dafür kann allerdings z. B. ein elektrisch vorgesteuertes, entsperrbares Rückschlagventil notwendig sein, damit der vom 3/2 Wegeventil abgesperrte Rücklauf des Schwenkzylinders bzw. des Rahmenschwenkaktors über einen Bypass freigegeben werden kann.

In der ersten Ausführung kann eine elektrische Vorsteuerung direkt auf den Wendebock zugreifen und eine Folgeschaltung zwischen Wendezylinder bzw. Rahmenschwenkaktor und Schwenkzylinder bzw. Einschwenkaktor steuern. Dies ist eine einfache Lösung, ohne weitere Ventile.

Eine Druckwaage bzw. ein Rahmenschwenkaktor ist für die Wendung des Pflugrahmens zuständig. Die Folgeschaltung kann z. B. über elektrisch vorgesteuerte Ventile direkt im Wendebock eingeleitet werden. Auf weitere Wegeventile oder Sperrventile kann verzichtet werden.

Ferner sei darauf hingewiesen, dass die elektrisch vorgesteuerten Ventile in beiden Ausführungen bzw. Ausführungsbeispielen durch hydraulisch vorgesteuerte Ventile ersetzbar sind. Außerdem kann der elektrische Endschalter bzw. Sensor auch ein hydraulischer Endschalter bzw. Sensor sein.

Nachstehend wird die Erfindung anhand von Ausführungsbeispielen in Verbindung mit zugehörigen Zeichnungen näher erläutert. Hierbei zeigen schematisch:
- Fig. 1: eine schematische Ansicht eines Anbaudrehpflugs für eine Zugmaschine nach einem ersten Ausführungsbeispiel; und
- Fig. 2: eine schematische Ansicht eines Anbaudrehpflugs für eine Zugmaschine nach einem zweiten Ausführungsbeispiel.

In der nachfolgenden Beschreibung werden gleiche Bezugszeichen für gleiche Gegenstände verwendet.

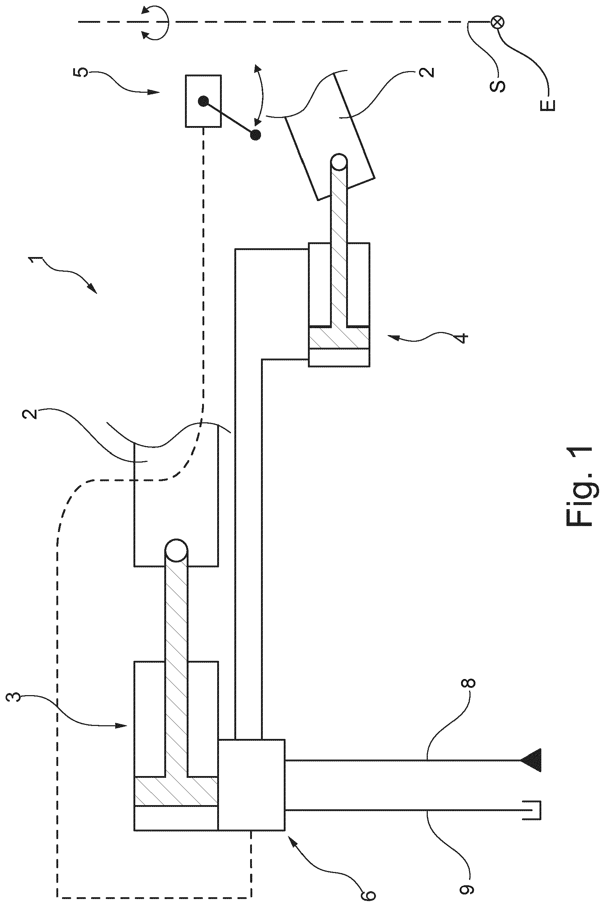

Figur 1 zeigt eine schematische Ansicht eines Anbaudrehpflugs 1 für eine Zugmaschine nach einem ersten Ausführungsbeispiel.

Genauer dargestellt zeigt Figur 1 einen Anbaudrehpflug 1 für eine Zugmaschine.

Der Anbaudrehpflug 1 hat einen Anbaubock (nicht dargestellt) zum Anbau an eine Zugmaschine, einen Pflugrahmen 2 zur Anbringung von Pflugscharen und einen Wendebock (nicht dargestellt), der mit dem Pflugrahmen 2 verbunden und zusammen mit dem Pflugrahmen 2 um eine Schwenkachse S drehbar am Anbaubock gelagert ist.

Des Weiteren hat der Anbaudrehpflug 1 einen Rahmenschwenkaktor 3, mit welchem der Pflugrahmen bzw. der Wendebock um die Schwenkachse S drehbar ist.

Ferner umfasst der Anbaudrehpflug 1 einen Einschwenkaktor 4, mit welchem der Pflugrahmen 2 um eine Einschwenkachse E quer zur Schwenkachse S hin in Flucht mit der Schwenkachse S oder weg aus der Flucht mit der Schwenkachse S bewegbar ist. Unter einem Hinbewegen des Pflugrahmens 2 in Flucht mit der Schwenkachse S wird ein Ausrichten des Pflugrahmens 2 entlang und an der Schwenkachse S verstanden, wie bei einer sich schließenden Schere. Somit wird unter einem Hinbewegen des Pflugrahmens 2 in Flucht mit der Schwenkachse S eine Verkleinerung des Winkels zwischen dem Pflugrahmen 2 und der Schwenkachse S verstanden. Dabei dreht der Pflugrahmen 2 um die Einschwenkachse E. Unter einem Wegbewegen des Pflugrahmens 2 aus der Flucht mit der Schwenkachse S wird eine Vergrößerung des Winkels zwischen dem Pflugrahmen 2 und der Schwenkachse S verstanden, wie bei einer auseinandergehenden Schere. Hierbei dreht der Pflugrahmen 2 ebenfalls um die Einschwenkachse E, jedoch entgegengesetzt zum Hinbewegen. Dadurch ist der Abstand von Pflugscharen zur Schwenkachse S veränderbar bzw. verringerbar, um das Drehen des Pflugrahmens 2 um die Schwenkachse S zu erleichtern. Ferner ist dadurch der Abstand von Pflugscharen zur Schwenkachse S erhöhbar, um ein anschließendes Pflügen zu ermöglichen. Somit ist der Einschwenkaktor 4 zwischen einer ersten Stellung (Abstand von Pflugscharen zur Schwenkachse S ist maximal) und einer zweiten Stellung (Abstand von Pflugscharen zur Schwenkachse S ist minimal) verfahrbar ist. Dabei ist in der ersten Stellung der Anbaudrehpflug 1 zum Pflügen einsatzbereit, wohingegen in der zweiten Stellung der Anbaudrehpflug 1 zum Transport auf der Straße oder zum Drehen um die Schwenkachse S einsatzbereit ist.

Wie Figur 1 zu entnehmen, hat der Anbaudrehpflug 1 einen elektrischen Sensor 5 zur Erfassung einer Position des Pflugrahmens 2 relativ zur Schwenkachse S.

Der elektrische Sensor 5 ist ein Kontaktschalter, welcher bei Kontakt ein elektrisches Signal erzeugt. Dabei erzeugt der elektrische Sensor 5 bei Kontakt mit dem Einschwenkaktor 4 oder mit einem Anschlags am Einschwenkaktor 4 ein elektrisches Signal. Zudem ist der elektrische Sensor 5 so am Pflugrahmen 2 angeordnet, dass der Sensor 5 dann kontaktierbar ist, wenn der Abstand von Pflugscharen zur Schwenkachse S ein Mindestmaß erreicht bzw. minimal ist. Anders ausgedrückt, ist der Sensor 5 dann kontaktierbar, wenn der Winkel zwischen dem Pflugrahmen 2 und der Schwenkachse S ein Mindestmaß erreicht bzw. minimal ist.

Wie ferner in Figur 1 gezeigt, hat der Anbaudrehpflug 1 einen Fluidzulauf 8 und einen Fluidrücklauf 9, um den Einschwenkaktor 4 und den Rahmenschwenkaktor 3 mit druckbeaufschlagten Fluid zu versorgen, wobei der Fluidzulauf 8 ein druckbeaufschlagtes Fluid zur Verfügung stellt.

Allgemein beschrieben umfasst gemäß Figur 1 der Anbaudrehpflug 1 eine Steuerschaltung 6, mit welcher der Rahmenschwenkaktor 3 und der Einschwenkaktor 4 verbunden und steuerbar sind.

Ferner ist der elektrische Sensor 5 mit der Steuerschaltung 6 verbunden, sodass ein Signal des Sensors 5 von der Steuerschaltung 6 empfangbar ist.

Die Steuerschaltung 6 ist eingerichtet und ausgebildet, nach dem Ausheben des Anbaudrehpfluges 1 aus einem Feldboden den Einschwenkaktor 4 so zu verfahren, dass dieser hin zur Schwenkachse S verfährt. Dabei wird der Pflugrahmen 2 um die Einschwenkachse E gedreht; und zwar so, dass der Pflugrahmen 2 bestmöglich mit der Schwenkachse S fluchtet.

Zudem ist die Steuerschaltung 6 eingerichtet und ausgebildet, nach Kontakt des elektrischen Sensors 5 die Bewegung des Einschwenkaktors 4 zu stoppen und eine Drehung des Pflugrahmens 2 mithilfe des Rahmenschwenkaktors 3 zu aktivieren.

Außerdem ist die Steuerschaltung 6 eingerichtet und ausgebildet, nach Drehung des Pflugrahmens 2 den Rahmenschwenkaktor 3 zu deaktivieren, wobei die Steuerschaltung 6 auch eingerichtet und ausgebildet ist, nach Drehung des Pflugrahmens 2 den Einschwenkaktor 4 so zu verfahren, dass dieser weg von der Schwenkachse S verfährt. Dabei wird der Pflugrahmen 2 um die Einschwenkachse E gedreht; und zwar so, dass der Pflugrahmen 2 nur noch gering oder gar nicht mit der Schwenkachse S fluchtet.

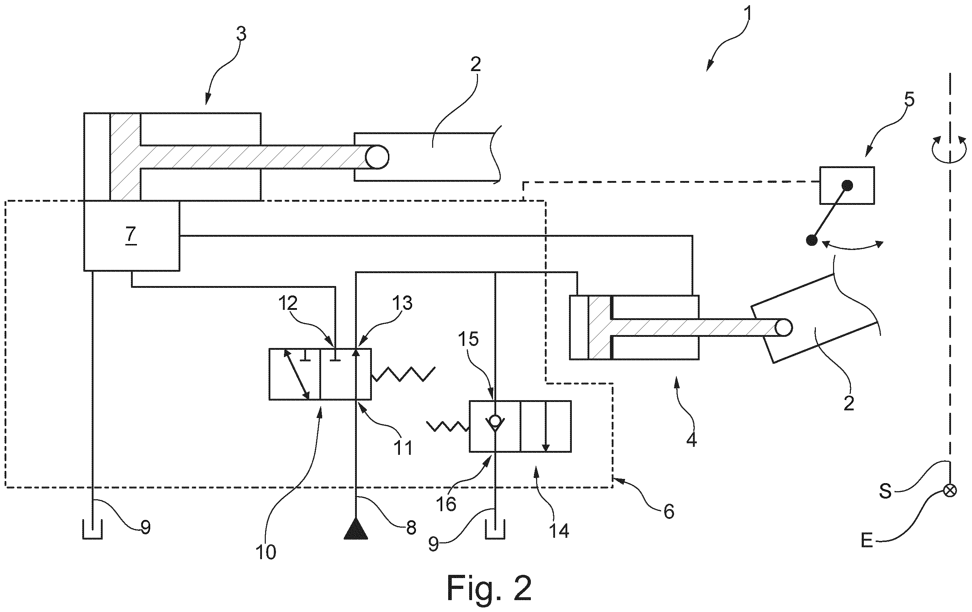

Figur 2 zeigt eine schematische Ansicht eines Anbaudrehpflugs 1 für eine Zugmaschine nach einem zweiten Ausführungsbeispiel.

Konkreter dargestellt zeigt Figur 2 einen Anbaudrehpflug 1 für eine Zugmaschine.

Der Anbaudrehpflug 1 hat einen Anbaubock (nicht dargestellt) zum Anbau an eine Zugmaschine, einen Pflugrahmen 2 zur Anbringung von Pflugscharen und einen Wendebock (nicht dargestellt), der mit dem Pflugrahmen 2 verbunden und zusammen mit dem Pflugrahmen 2 um eine Schwenkachse S drehbar am Anbaubock gelagert ist.

Des Weiteren hat der Anbaudrehpflug 1 einen Rahmenschwenkaktor 3, mit welchem der Pflugrahmen 2 bzw. der Wendebock um die Schwenkachse S drehbar ist.

Ferner umfasst der Anbaudrehpflug 1 einen Einschwenkaktor 4, mit welchem der Pflugrahmen 2 um eine Einschwenkachse E quer zur Schwenkachse S hin in Flucht mit der Schwenkachse S oder weg aus der Flucht mit der Schwenkachse S bewegbar ist.

Unter einem Hinbewegen des Pflugrahmens 2 in Flucht mit der Schwenkachse S wird ein Ausrichten des Pflugrahmens 2 entlang und an der Schwenkachse S verstanden, wie bei einer sich schließenden Schere. Somit wird unter einem Hinbewegen des Pflugrahmens 2 in Flucht mit der Schwenkachse S eine Verkleinerung des Winkels zwischen dem Pflugrahmen 2 und der Schwenkachse S verstanden. Dabei dreht der Pflugrahmen 2 um die Einschwenkachse E. Unter einem Wegbewegen des Pflugrahmens 2 aus der Flucht mit der Schwenkachse S wird eine Vergrößerung des Winkels zwischen dem Pflugrahmen 2 und der Schwenkachse S verstanden, wie bei einer auseinandergehenden Schere. Hierbei dreht der Pflugrahmen 2 ebenfalls um die Einschwenkachse E, jedoch entgegengesetzt zum Hinbewegen. Dadurch ist der Abstand von Pflugscharen zur Schwenkachse S veränderbar bzw. verringerbar, um das Drehen des Pflugrahmens 2 um die Schwenkachse S zu erleichtern. Ferner ist dadurch der Abstand von Pflugscharen zur Schwenkachse S erhöhbar, um ein anschließendes Pflügen zu ermöglichen. Somit ist der Einschwenkaktor 4 zwischen einer ersten Stellung (Abstand von Pflugscharen zur Schwenkachse S ist maximal) und einer zweiten Stellung (Abstand von Pflugscharen zur Schwenkachse S ist minimal) verfahrbar ist. Dabei ist in der ersten Stellung der Anbaudrehpflug 1 zum Pflügen einsatzbereit, wohingegen in der zweiten Stellung der Anbaudrehpflug 1 zum Transport auf der Straße oder zum Drehen um die Schwenkachse S einsatzbereit ist.

Wie Figur 2 zu entnehmen, hat der Anbaudrehpflug 1 einen elektrischen Sensor 5 zur Erfassung einer Position des Pflugrahmens 2 relativ zur Schwenkachse S.

Der elektrische Sensor 5 ist ein Kontaktschalter, welcher bei Kontakt ein elektrisches Signal erzeugt. Dabei erzeugt der elektrische Sensor 5 bei Kontakt mit dem Einschwenkaktor 4 oder mit einem Anschlag am Einschwenkaktor 4 ein elektrisches Signal. Zudem ist der elektrische Sensor 5 so am Pflugrahmen 2 angeordnet, dass der Sensor 5 dann kontaktierbar ist, wenn der Abstand von Pflugscharen zur Schwenkachse S ein Mindestmaß erreicht bzw. minimal ist. Anders ausgedrückt, ist der Sensor 5 dann kontaktierbar, wenn der Winkel, ähnlich sich schließender Scherenschenkel, zwischen dem Pflugrahmen 2 und der Schwenkachse S ein Mindestmaß erreicht bzw. minimal ist.

Wie in Figur 2 dargestellt, hat der Anbaudrehpflug 1 einen Fluidzulauf 8 und einen Fluidrücklauf 9, um den Einschwenkaktor 4 und den Rahmenschwenkaktor 3 mit druckbeaufschlagten Fluid zu versorgen, wobei der Fluidzulauf 8 ein druckbeaufschlagtes Fluid zur Verfügung stellt.

Allgemein beschrieben umfasst gemäß Figur 2 der Anbaudrehpflug 1 eine Steuerschaltung 6, mit welcher der Rahmenschwenkaktor 3 und der Einschwenkaktor 4 verbunden und steuerbar sind.

Ferner ist der elektrische Sensor 5 mit der Steuerschaltung 6 verbunden, sodass ein Signal des Sensors 5 von der Steuerschaltung 6 empfangbar ist.

Die Steuerschaltung 6 ist eingerichtet und ausgebildet, nach dem Ausheben des Anbaudrehpfluges 1 aus einem Feldboden den Einschwenkaktor 4 so zu verfahren, dass dieser hin zur Schwenkachse S verfährt. Dabei wird der Pflugrahmen 2 um die Einschwenkachse E gedreht; und zwar so, dass der Pflugrahmen 2 bestmöglich mit der Schwenkachse S fluchtet.

Zudem ist die Steuerschaltung 6 eingerichtet und ausgebildet, nach Kontakt des elektrischen Sensors 5 die Bewegung des Einschwenkaktors 4 zu stoppen und eine Drehung des Pflugrahmens 2 mithilfe des Rahmenschwenkaktors 3 zu aktivieren.

Außerdem ist die Steuerschaltung 6 eingerichtet und ausgebildet, nach Drehung des Pflugrahmens 2 den Rahmenschwenkaktor 3 zu deaktivieren, wobei die Steuerschaltung 6 auch eingerichtet und ausgebildet ist, nach Drehung des Pflugrahmens 2 den Einschwenkaktor 4 so zu verfahren, dass dieser weg von der Schwenkachse S verfährt. Dabei wird der Pflugrahmen 2 um die Einschwenkachse E gedreht; und zwar so, dass der Pflugrahmen 2 nur noch gering oder gar nicht mit der Schwenkachse S fluchtet, also ähnlich zweier beabstandeter Scherenschenkel einer geöffneten Schere.

Viel konkreter geschildert, umfasst gemäß Figur 2 die Steuerschaltung 6 eine Schalteinheit 7, die mit dem Einschwenkaktor 4 und dem Rahmenschwenkaktor 3 verbunden ist. Dabei ist die Schalteinheit 7 eingerichtet und ausgebildet, den Einschwenkaktor 4 und den Rahmenschwenkaktor 3 anzusteuern und die beiden zu verfahren sowie ein Signal des elektrischen Sensors 5 auszuwerten und entsprechend den Einschwenkaktor 4 und/oder den Rahmenschwenkaktor 3 zu verfahren.

Ferner zeigt Figur 2, dass die Steuerschaltung 6 ein 3/2 Wege-Ventil 10 aufweist, welches zwischen einem Fluidzulauf 8 des Anbaudrehpfluges 1 und dem Einschwenkaktor 4 sowie zwischen dem Fluidzulauf 8 des Anbaudrehpfluges 1 und der Schalteinheit 7 angeordnet ist. Zudem ist das 3/2 Wege-Ventil 10 zwischen dem Fluidzulauf 8 und dem Rahmenschwenkaktor 3 angeordnet.

Dabei hat das 3/2 Wege-Ventil 10 einen Eingang 11 und zwei Ausgänge 12, 13, wobei der Eingang 11 fluidkommunizierend mit dem Fluidzulauf 8 verbunden ist. Ein erster Ausgang 12 ist mit der Schalteinheit 7 oder mit einem Sperranschluss verbindbar. Ein zweiter Ausgang 13 ist mit einem Sperranschluss und mit dem Einschwenkaktor 4 sowie mit einem 2/2 Wege-Ventil 14 der Steuerschaltung 6 fluidkommunizierend verbindbar.

In einer Grundstellung des 3/2 Wege-Ventils 10 gestattet dieses einen Durchfluss von dem Fluidzulauf 8 des Anbaudrehpfluges 1 zum Einschwenkaktor 4 und sperrt einen Durchfluss zum Rahmenschwenkaktor 3. Dabei sind der Eingang 11 und der zweite Ausgang 13 miteinander fluidkommunizierend miteinander verbunden.

In einer Arbeitsstellung des 3/2 Wege-Ventils 10 gestattet dieses einen Durchfluss vom Fluidzulauf 8 zum Rahmenschwenkaktor 3 und sperrt einen Durchfluss zum Einschwenkaktor 4. Dabei sind der Eingang 11 und der erste Ausgang 12 fluidkommunizierend miteinander verbunden.

Außerdem zeigt Figur 2, dass die Steuerschaltung 6 ein 2/2 Wege-Ventil 14 aufweist, welches zwischen dem 3/2 Wege-Ventil 10 und dem Einschwenkaktor 4 sowie einem Fluidrücklauf 9 des Anbaudrehpfluges 1 angeordnet ist.

Das 2/2 Wege-Ventil 14 umfasst einen Eingang 15 und einen Ausgang 16, wobei der Eingang 15 mit dem Einschwenkaktor 4 und mit dem 3/2 Wege-Ventil 10 der Steuerschaltung 6 bzw. mit dessen zweiten Ausgang 13 fluidkommunizierend verbunden ist. Der Ausgang 16 ist mit dem Fluidrücklauf 9 des Anbaudrehpfluges 1 fluidkommunizierend verbindbar.

In einer Grundstellung des 2/2 Wege-Ventils 14 ist dieses gesperrt, z. B. mittels eines Rückschlagventils. In einer Arbeitsstellung des 2/2 Wege-Ventils 14 gestattet dieses einen Durchfluss zum Fluidrücklauf 9 des Anbaudrehpfluges 1. Dabei sind der Eingang 15 und der Ausgang 16 fluidkommunizierend miteinander verbunden.

Außerdem ist die Schalteinheit 7 eingerichtet und ausgebildet ist, den Einschwenkaktor 4, den Rahmenschwenkaktor 3, das 3/2 Wege-Ventil 10 und das 2/2 Wege-Ventil 14 zu verfahren und/oder zu schalten.

Ferner ist die Schalteinheit 7 eingerichtet und ausgebildet, ein Signal des elektrischen Sensors 5 auszuwerten und entsprechend den Einschwenkaktor 4, den Rahmenschwenkaktor 5, das 3/2 Wege-Ventil 10 und das 2/2 Wege-Ventil 14 zu verfahren und/oder zu schalten.

Abschließend sei betreffend das erste und zweite Ausführungsbeispiel erwähnt, dass der Einschwenkaktor 4 sowie der Rahmenschwenkaktor 3 ein doppelwirkender Hydraulikzylinder ist.

Nachstehend wird zusätzlich noch ein Verfahren zur Steuerung eines Anbaudrehpfluges 1 vorgestellt.

Um das Verfahren zu verwirklichen umfasst der Anbaudrehpflug 1 einen Anbaubock zum Anbau an eine Zugmaschine und einen Pflugrahmen 2 zur Anbringung von Pflugscharen und einen Wendebock, der mit dem Pflugrahmen 2 verbunden und zusammen mit dem Pflugrahmen 2 um eine Schwenkachse S drehbar am Anbaubock gelagert ist.

Ferner hat der Anbaudrehpflug 1 einen Rahmenschwenkaktor 3, mit welchem der Pflugrahmen 2 und der Wendebock um die Schwenkachse S drehbar ist.

Des Weiteren umfasst der Anbaudrehpflug 1 einen Einschwenkaktor 4, mit welchem der Pflugrahmen 2 um eine Einschwenkachse E quer zur Schwenkachse S hin in Flucht mit der Schwenkachse S oder weg aus der Flucht mit der Schwenkachse S bewegbar ist.

Unter einem Hinbewegen des Pflugrahmens 2 in Flucht mit der Schwenkachse S wird ein Ausrichten des Pflugrahmens 2 entlang und an der Schwenkachse S verstanden, wie bei einer sich schließenden Schere. Somit wird unter einem Hinbewegen des Pflugrahmens 2 in Flucht mit der Schwenkachse S eine Verkleinerung des Winkels zwischen dem Pflugrahmen 2 und der Schwenkachse S verstanden. Dabei dreht der Pflugrahmen 2 um die Einschwenkachse E. Unter einem Wegbewegen des Pflugrahmens 2 aus der Flucht mit der Schwenkachse S wird eine Vergrößerung des Winkels zwischen dem Pflugrahmen 2 und der Schwenkachse S verstanden, wie bei einer auseinandergehenden Schere. Hierbei dreht der Pflugrahmen 2 ebenfalls um die Einschwenkachse E, jedoch entgegengesetzt zum Hinbewegen. Dadurch ist der Abstand von Pflugscharen zur Schwenkachse S veränderbar bzw. verringerbar, um das Drehen des Pflugrahmens 2 zu erleichtern. Ferner ist dadurch der Abstand von Pflugscharen zur Schwenkachse S erhöhbar, um ein anschließendes Pflügen zu ermöglichen. Somit ist der Einschwenkaktor 4 zwischen einer ersten (Abstand von Pflugscharen zur Schwenkachse S ist maximal) und einer zweiten Stellung (Abstand von Pflugscharen zur Schwenkachse S ist minimal) verfahrbar ist. Dabei ist in der ersten Stellung der Anbaudrehpflug 1 zum Pflügen einsatzbereit, wohingegen in der zweiten Stellung der Anbaudrehpflug 1 zum Transport auf der Straße oder zum Drehen um die Schwenkachse S einsatzbereit ist.

Das Verfahren umfasst als ersten Schritt, ein Ausheben des Anbaudrehpfluges 1 aus einem Feldboden.

Danach wird der Einschwenkaktor 4 verfahren und zwar derart, dass sich der Pflugrahmen 2 um die Einschwenkachse E quer zur Schwenkachse S hin in Flucht mit der Schwenkachse S bewegt, wodurch die Querausladung verringerbar ist und das Drehen des Pflugrahmens 2 um die Schwenkachse S erleichtert wird.

Bei Kontaktierung eines elektrischen Sensors 5 wird die Bewegung des Einschwenkaktors 4 gestoppt und eine Drehung des Pflugrahmens 2 mithilfe des Rahmenschwenkaktors 3 um die Schwenkachse S aktiviert.

Nach Drehung des Pflugrahmens 2 wird der Rahmenschwenkaktor 3 deaktiviert und der Einschwenkaktor 4 verfahren und zwar derart, dass sich der Pflugrahmen 2 um die Einschwenkachse E quer zur Schwenkachse S weg aus der Flucht mit der Schwenkachse S bewegt, um ein weiteres Pflügen zu ermöglichen.

Abschließend wird der Anbaudrehpflug 1 in den Feldboden abgelassen.

### Bezugszeichenliste

- 1: Anbaudrehpflug
- 2: Pflugrahmen
- 3: Rahmenschwenkaktor
- 4: Einschwenkaktor
- 5: Sensor
- 6: Steuerschaltung
- 7: Schalteinheit
- 8: Fluidzulauf
- 9: Fluidrücklauf
- 10: 3/2 Wege-Ventil
- 11: Eingang
- 12: erster Ausgang
- 13: zweiter Ausgang
- 14: 2/2 Wege-Ventil
- 15: Eingang
- 16: Ausgang

- E: Einschwenkachse
- S: Schwenkachse

## Patentansprüche

1. Anbaudrehpflug (1) für eine Zugmaschine aufweisend:
- einen Anbaubock zum Anbau an eine Zugmaschine,
- einen Pflugrahmen (2) zur Anbringung von Pflugscharen,
- einen Wendebock, der mit dem Pflugrahmen (2) verbunden und zusammen mit dem Pflugrahmen (2) um eine Schwenkachse (S) drehbar am Anbaubock gelagert ist,
- einen Rahmenschwenkaktor (3), mit welchem der Pflugrahmen (2) und/oder der Wendebock um die Schwenkachse (S) drehbar ist,
- einen Einschwenkaktor (4), mit welchem der Pflugrahmen (2) um eine Einschwenkachse (E) quer zur Schwenkachse (S) hin in Flucht mit der Schwenkachse (S) oder weg aus der Flucht mit der Schwenkachse (S) bewegbar ist,
**dadurch gekennzeichnet, dass**
der Anbaudrehpflug (1) einen elektrischen oder hydraulischen Sensor (5) zur Erfassung einer Position des Pflugrahmens (2) relativ zur Schwenkachse (S) aufweist.

2. Anbaudrehpflug nach Anspruch 1,
- wobei der Sensor (5) ein Kontaktschalter ist, welcher bei Kontakt ein elektrisches oder hydraulisches Signal erzeugt,
und/oder
- wobei der Sensor (5) bei Kontakt mit dem Pflugrahmen (2) oder bei Kontakt mit dem Einschwenkaktor (4) oder mit einem Anschlag am Einschwenkaktor (4) ein elektrisches oder hydraulisches Signal erzeugt,
und/oder
- wobei der Sensor (5) so am Pflugrahmen (2) angeordnet ist, dass der Sensor (5) "nur dann" kontaktierbar ist, wenn der Abstand von Pflugscharen zur Schwenkachse (S) ein Mindestmaß erreicht bzw. minimal ist.

3. Anbaudrehpflug nach Anspruch 1 oder 2,
- wobei der Anbaudrehpflug (1) eine Steuerschaltung (6) umfasst, mit welcher der Rahmenschwenkaktor (3) und/oder der Einschwenkaktor (4) verbunden und/oder steuerbar ist.

4. Verfahren zur Steuerung eines Anbaudrehpfluges (1),
- wobei der Anbaudrehpflug (1) umfasst:
- einen Anbaubock zum Anbau an eine Zugmaschine,
- einen Pflugrahmen (2) zur Anbringung von Pflugscharen,
- einen Wendebock, der mit dem Pflugrahmen (2) verbunden und zusammen mit dem Pflugrahmen (2) um eine Schwenkachse (S) drehbar am Anbaubock gelagert ist,
- einen Rahmenschwenkaktor (3), mit welchem der Pflugrahmen (2) und/oder der Wendebock um die Schwenkachse (S) drehbar ist,
- einen Einschwenkaktor (4), mit welchem der Pflugrahmen (2) um eine Einschwenkachse (E) quer zur Schwenkachse (S) hin in Flucht mit der Schwenkachse (S) oder weg aus der Flucht mit der Schwenkachse (S) bewegbar ist, sodass die Arbeitsbreite oder der Abstand von Pflugscharen zur Schwenkachse (S) veränderbar bzw. verringerbar ist, um das Drehen des Pflugrahmens zu erleichtern, oder erhöhbar ist, um ein anschließendes Pflügen zu ermöglichen,
wobei das Verfahren die folgenden Schritte umfasst:
- Ausheben des Anbaudrehpfluges (1) aus einem Feldboden,
- Verfahren des Einschwenkaktors (4) und zwar derart, dass sich der Pflugrahmen (2) um die Einschwenkachse (E) quer zur Schwenkachse (S) hin in Flucht mit der Schwenkachse (S) bewegt, wodurch die Querausladung verringerbar ist und das Drehen des Pflugrahmens (2) um die Schwenkachse (S) erleichtert wird,
- bei Kontaktierung eines Sensors (5) Stoppen der Bewegung des Einschwenkaktors (4) und Aktivieren einer Drehung des Pflugrahmens (2) mithilfe des Rahmenschwenkaktors (3) um die Schwenkachse (S),
- nach Drehung des Pflugrahmens (2) Deaktivieren des Rahmenschwenkaktors (3),
- Verfahren des Einschwenkaktors (4) und zwar derart, dass der Pflugrahmen (2) um die Einschwenkachse (E) quer zur Schwenkachse (S) weg aus der Flucht mit der Schwenkachse (S) bewegbar ist, um ein weiteres Pflügen zu ermöglichen,
- Ablassen des Anbaudrehpfluges (1) in einen Feldboden.
